# EUROPEAN PATENT APPLICATION

(11) **EP 1 724 501 A1**
(43) Date of publication of application: **22.11.2006**
(21) Application number: 05720594.0
(22) Date of filing: 11.03.2005
(51) Int. Cl.: F16J 15/16

(54) **HERMETICALLY SEALING DEVICE**

(30) Priority: 12.03.2004 JP 2004070870; 16.06.2004 JP 2004178026; 28.12.2004 JP 2004379310
(71) Applicant: NOK CORPORATION, Tokyo 105-8585 (JP)
(72) Inventor: HAMAYA, Yasunari, c/o NOK CORPORATION, Fukushima-shi, Fukushima 9601193 (JP); TAGUCHI, Shinichiro, c/o NOK CORPORATION, Fukushima-shi, Fukushima 9601193 (JP); KANZAKI, Yoshiyuki, c/o NOK CORPORATION, Fukushima-shi, Fukushima 9601193 (JP); GOTO, Kiichiro, c/o NOK CORPORATION, Fukushima-shi, Fukushima 9601193 (JP)
(74) Representative: TBK-Patent
(86) International application number: PCT/JP2005/004323
(87) International publication number: WO 2005/088173

(57) **Abstract**

In a hermetically sealing device provided by fitting and mounting a seal member on an annular member, fitting strength between the annular member and the seal member is reduced. A seal member (7) is provided with a reinforcing ring (7b), a contact part (72), which is integrally provided with the reinforcing ring (7b) and contacts a first outer circumference skirt part (13a) when it is fitted in the first outer circumference skirt part (13a) of a piston member (11), and a seal main body (7a) which has a seal lip (71) which hermetically contacts a circumference plane of a piston inserting hole (5).

## Description

### TECHNICAL FIELD

The present invention relates to a hermetically sealing device applicable for a hydraulic piston of automobile automatic transmission or the like.

### BACKGROUND ART

As the automatic transmission for use in automobile, AT (automatic transmission) which automatically controls changing of speeds by controlling a multiple disc clutch using a pressing force of a hydraulic piston which is moved hydraulically in a rotating condition has been well known.

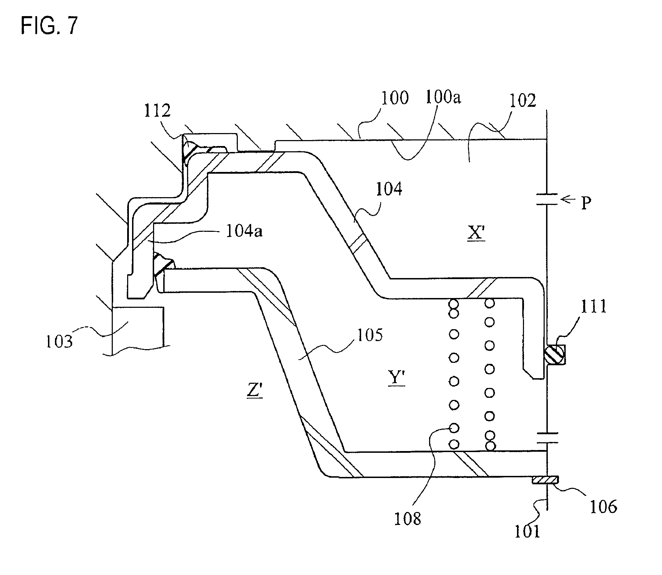

FIG. 7 is a schematic half sectional view for explaining the schematic structure of a speed converting section of the AT.

As shown in FIG. 7, an annular piston insertion hole 102 is formed by the inner peripheral face of a housing 100 in which a shaft 101 is inserted and the outer peripheral face of the shaft 101.

A multiple disc clutch 103 is provided inside the housing 100 and an annular piston member (annular member) 104 is disposed in the piston insertion hole 102 movably in the axial direction.

An annular cancel plate 105 which restricts the motion in the axial direction is mounted on the outer periphery of the shaft 101. This cancel plate is restricted from moving by a stopper 106 provided on the shaft 101.

An O-ring 111 is provided in an annular groove provided in the outer peripheral face of the shaft 101 in order to seal an annular gap between the inner peripheral face of the piston member 104 and the outer peripheral face of the shaft 101 and a seal lip 112 is provided on the outer peripheral face of the piston member 104 such that it makes hermetic contact with the inner peripheral face in of the housing 100 order to seal the inner peripheral face.

A pressure chamber X' and hydraulic chambers Y', Z' are formed separately within the housing 100.

When with the above-described structure, hydraulic pressure (indicated with an arrow P) is applied to the pressure chamber X' so that the pressure rises, the piston member 104 is stroked to a cancel plate 105 side (downward in the Figure) resisting a biasing force of a spring 108 so that an end section of the outer peripheral cylindrical section 104a of the piston member 104 presses the multiple disc clutch 103. The clutch discs provided on the housing 100 side make frictional contact with the clutch discs on the output shaft (not shown) side so as to transmit a rotation force of the housing 100 to an output shaft.

To cancel transmission of drive force by the multiple disc clutch 103, the pressure in the pressure chamber X' is reduced so as to stroke the piston member 104 to an end face 100a side of the housing 100 with a biasing force of a spring 108.

The piston member 104 is moved in the axial direction by receiving a hydraulic pressure and seal lip 112 and the like function as so-called bonded piston seal (hermetically sealing device) that is formed integrally on a base material.

The automatic transmission for use in automobile has tended to be constructed in multi-stages in recent years and for example, if there is a restriction of space in the axial direction like FF (front-wheel-drive) type and particularly the capacity of the automatic transmission is large, the bonded piston seal has tended to be increased in diameter.

If the bonded piston seal is in a large diameter, a mold for forming the seal lip integrally on the base material is increased in size, thereby inducing an increase in manufacturing cost of the mold.

Then, there has been known an art of forming a sealing member which is comparable to the seal lip 112 separately from the piston member 104 and fitting the sealing member to the piston member to construct the bonded piston seal (see, for example, patent document 1).
Patent document 1: Japanese Patent Application Laid-Open No.2003-139249

### DISCLOSURE OF THE INVENTION

### PROBLEM TO BE SOLVED BY THE INVENTION

However, a large fitting force is necessary when fitting a metal ring to a piston member because the above-described related art uses the metal ring (core bar) as an object to be fitted to the piston member. Further, the fitting force disperses largely, so that the metal ring may become likely to be deformed.

Further, the allowance of a fitting diameter of the metal ring needs to be restricted strictly for both the piston member side and sealing member side in order to suppress dispersion of the fitting force in terms of manufacturing and consequently, addition of grinding or the like and improvement of processing accuracy are needed, thereby possibly leading to increase in manufacturing cost. If the fitting force upon fitting the metal ring to the piston member is large, the output of additional equipment for use in fitting operation needs to be increased.

The present invention has been achieved to solve the problem of the related art and an object of the invention is to provide an art for reducing the fitting force between the annular member and the sealing member in a hermetically sealing device for use in fitting the sealing member to the annular member.

### MEANS FOR SOLVING THE PROBLEM

To achieve the above mentioned object, the present invention provides a hermetically sealing device comprising:
an annular member which is provided in an annular hole movably in the axial direction and includes a radial section and an axial section extending in the axial direction from at least one of an inner diameter end section and an outer diameter end section of the radial section, and
a sealing member which is provided so as to be fitted to the axial section of the annular member for hermetically sealing an annular gap between the annular member and the peripheral face of the annular hole,
the hermetically sealing device sealing one side and the other side in the axial direction of the annular member, wherein
the sealing member includes
a reinforcement ring, and
a seal main body which is provided integrally in the reinforcement ring and has a contact section making contact with the axial section and a seal lip making hermetic contact with the peripheral face of the annular hole when the sealing member is fitted to the axial section of the annular member.

Consequently, when the sealing member is fitted to the axial section of the annular member, the contact section of the seal main body is fitted to the axial section and thus, the reinforcement ring never makes contact with the annular member when the sealing member is fitted to the annular member.

Therefore, the fitting force between the sealing member and the annular member can be reduced as compared with a case where the reinforcement ring is fitted to the piston member in a contact condition. Further, the dispersion of the fitting force can be suppressed as compared with a case where the sealing member is fitted in a condition in which the reinforcement ring is in contact with the piston member. That is, the sealing member is never deformed when it is fitted to the annular member. Further because the allowance of the diameter of the reinforcement ring does not need to be restricted strictly, increase of manufacturing cost due to addition of grinding or the like and improvement of processing accuracy is not induced.

If there is a restriction of space in the axial direction, the length in the axial direction and space between the outer and inner circumferences (wall dimension) in the radial direction of the contact section which makes contact with the piston member are restricted. Thus, if the seal main body is composed of rubber elastic body, the compressibility of the rubber elastic body needs to be increased to secure a fitting force between the sealing member and the annular member.

However, if the sealing member having the contact section having a high compressibility composed of rubber elastic body is fitted to the annular member, there is a fear that "peeling" of the rubber elastic body may be generated.

According to above-described structure, it is preferred that the contact section further comprises a groove extending in the axial direction in a section making contact with the axial section.

By providing with the groove extending in the axial direction, the rubber elastic body constituting the contact section is deformed by compression and escapes (is absorbed) into the groove when the sealing member is fitted to the annular member, thereby suppressing generation of "peeling" of the rubber elastic body.

If the contact section is provided with the groove extending in the axial direction, the sealing performance on the inner circumference side which makes contact with the axial section may drop.

According to above-described structure, it is preferred that the seal main body further comprises a seal lip making hermetic contact with an angle section located between the axial section and the radial section, the axial section or the radial section.

Consequently, the sealing performance between the sealing member and the annular member can be improved. Even if the contact section is provided with no groove extending in the axial direction, the sealing performance between the sealing member and the annular member can be improved by providing the seal lip.

In addition, it is preferred that the axial section further comprises a groove extending in the circumferential direction in a section making contact with the contact section.

Consequently, the sealing member can be blocked from loosing out of the annular member.

According to a preferred embodiment of the present invention, there is provided a hermetically sealing device comprising:
an annular member which is provided in an annular hole movably in the axial direction and includes a radial section and an axial section extending in the axial direction from at least one of an inner diameter end section and an outer diameter end section of the radial section; and
a sealing member which is provided so as to be fitted to the axial section of the annular member for hermetically sealing an annular gap between the annular member and the peripheral face of the annular hole,
the hermetically sealing device sealing one side and the other side in the axial direction of the annular member, wherein
the sealing member includes
a reinforcement ring, and
a seal main body which is provided integrally on the reinforcement ring and has a seal lip making hermetic contact with the peripheral face of the annular hole and a projecting section which is provided so as to project to the axial section of the annular member and fitted to the axial section to seal an annular gap on the axial section.

When the sealing member is fitted to the axial section of the annular member, the projecting section of the seal main body makes hermetic contact with the axial section and thus, the reinforcement ring never makes contact with the annular member when the sealing member is fitted to the annular member.

Because the sealing member is provided with the projecting section and it is fitted to the annular member through the projecting section, the sealing member has a space (empty space) in which it is deformable (can be displaced) (space in which the rubber elastic body is deformed by compression and can escape) even if the sealing member is fitted to the annular member so that the rubber elastic body is compressed, thereby suppressing occurrence of "peeling" of the rubber elastic body when the sealing member is fitted.

The projecting section is provided to seal the annular gap on the annular member with respect to the axial section whereby suppressing leakage of sealing object fluid through the annular gap. Although the projecting section is preferred to be provided on an entire circumference of the sealing member, it is not restricted to this example if it is provided so as to seal the annular gap of the annular member with respect to the axial section in a condition in which the sealing member is fitted to the annular member.

### EFFECT OF THE INVENTION

According to the present invention, there is provided a hermetically sealing device provided by fitting and mounting a seal member on an annular member, thereby fitting strength between the annular member and the seal member is reduced.
BRIEF DESCRIPTION OF THE DRAWINGS
FIG. 1 is a schematic sectional view for explaining the schematic half structure of a speed converting section applied to the hermetically sealing device according to a first embodiment of the present invention;
FIG. 2 is a schematic half sectional view showing a sealing member constituting the hermetically sealing device according to the first embodiment of the present invention;
FIG. 3 is a schematic half sectional view showing a piston member constituting the hermetically sealing device according to the first embodiment of the present invention;
FIG. 4 is a schematic sectional view showing major parts of a piston member constituting the hermetically sealing device according to the first embodiment of the present invention;
FIG. 5 is a schematic half sectional view showing the sealing member constituting the hermetically sealing device according to a second embodiment of the present invention;
FIG. 6 is a schematic sectional view showing a modification of a sealing member constituting the hermetically sealing device according to the second embodiment of the present invention; and
FIG. 7 is a schematic structure diagram of a speed converting section applying the hermetically sealing device of related art.

### DESCRIPTION OF REFERENCE NUMERALS

- 1:: bonded piston seal
- 11:: piston member
- 12:: end wall
- 13:: outer peripheral skirt section
- 13a:: first outer peripheral skirt section
- 13b:: second outer peripheral skirt section
- 13c:: third outer peripheral skirt section
- 13d:: circumferential groove
- 14:: inclined section
- 15:: radial section
- 16:: inner peripheral skirt section
- 17:: angle section
- 2:: shaft
- 21:: annular groove
- 22:: passage
- 23:: passage
- 3:: housing
- 31:: radial section
- 32:: first circular section
- 33:: second circular section
- 34:: third circular section
- 35:: positioning protrusion
- 4:: multiple disc clutch
- 5:: piston insertion hole
- 6:: O-ring
- 7, 70:: sealing member
- 7a:: seal main body
- 7b:: reinforcement ring
- 71,: 74: seal lip
- 72:: contact section
- 73:: longitudinal groove
- 75:: inner peripheral face
- 76:: projecting section
- 77:: projecting section
- 77a:: radial end face
- 77b:: inclined end face
- 8:: cancel plate
- 81:: seal lip
- 9:: stopper
- 10:: spring

### BEST MODE FOR CARRYING OUT THE INVENTION

Hereinafter, the best mode for carrying out the present invention will be described in detail with reference to the accompanying drawings. The dimension, material, shape, relative arrangement and the like of the component described in this embodiment are changed appropriately depending on the structure or various conditions of an apparatus to which the present invention is applied and the scope of the present invention is not restricted to the embodiments described below.

### (First embodiment)

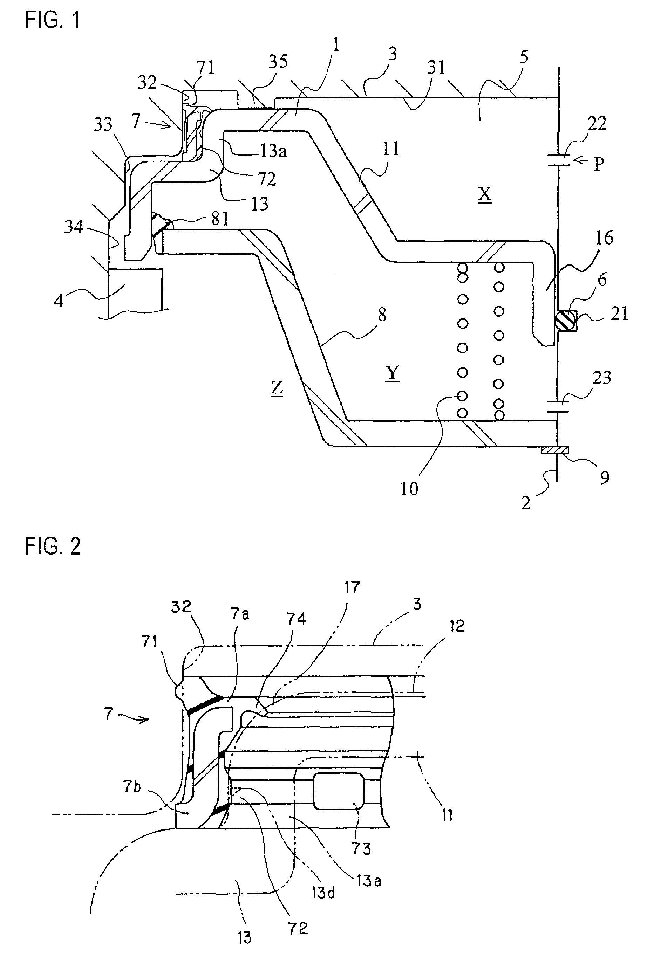

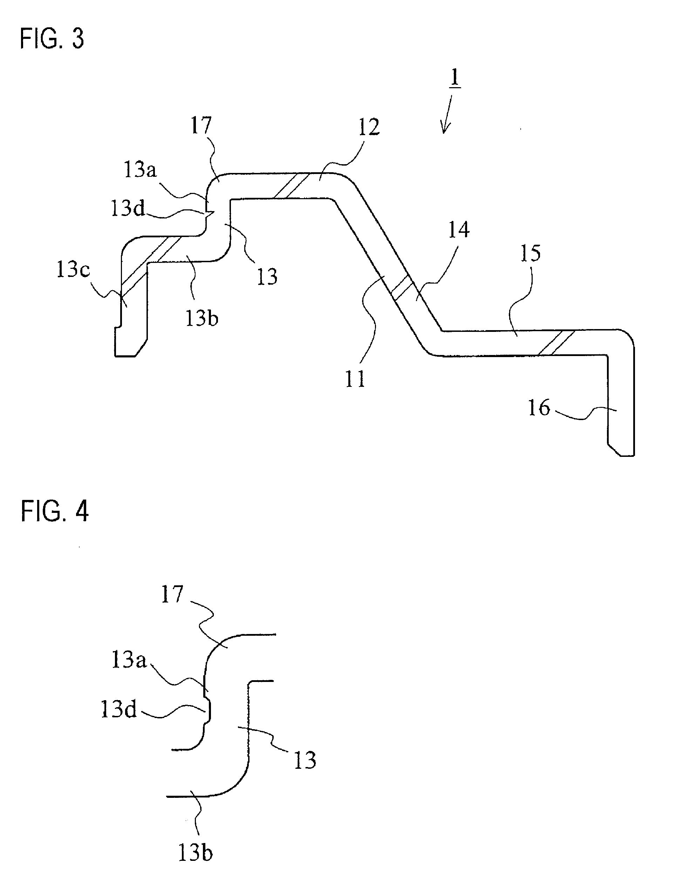

FIG. 1 is a schematic half sectional view for explaining the schematic structure of a speed converting section applying bonded piston seal 1 as a hermetically sealing device according to a first embodiment of the present invention. FIG. 2 is a schematic half sectional view showing a sealing member 7 constituting the bonded piston seal 1 as the hermetically sealing device according to the first embodiment of the invention. FIG. 3 is a schematic half sectional view showing a piston member 11 constituting the bonded piston seal 1 as the hermetically sealing device according to the first embodiment of the invention. FIG. 4 is a schematic sectional view showing major parts of the piston member 11 shown in FIG. 3.

The bonded piston seal 1 is used for turning ON/OFF engagement of the clutch discs of automobile automatic transmission such as AT.

Hereinafter, the bonded piston seal 1 according to the embodiment of the present invention and the structure of the speed converting section applying the bonded piston seal 1 will be described.

As shown in FIG. 1, the speed converting section is provided with a shaft 2 and a housing 3 having a substantially L-shaped inside section provided on the outer periphery of the shaft 2.

The housing 3 has a radial section 31 and first, second, third circular sections 32, 33, 34. The multiple disc clutch 4 is incorporated inside the third circular section 34 whose inside diameter is larger than the first and second circular sections 32, 33. In the meantime, the hermetically sealing device of this embodiment may be used as a device for turning ON/OFF a brake as a brake plate.

An annular piston insertion hole (annular hole) 5 is formed between the inner peripheral face of the first, second and third circular sections 32, 33, 34 and the outer peripheral face of the shaft 2 and the piston member 11 as the annular member is inserted in the piston insertion hole 5 such that it is capable of moving in the axial direction.

The piston member 11 is a metal ring composed of thin steel sheet (for example, SPCC), comprised of a washer-like end wall 12 which faces the end face of the radial section 31 of the housing 3, an outer peripheral skirt section 13 extending in the axial direction toward the multiple disc clutch 4 from the outer diameter end section of the end wall 12, an inclined section 14 extending obliquely in the inward direction and toward the multiple disc clutch 4 side in the axial direction from an inner diameter end section of the end wall 12, a radial section 15 extending inwardly in the radial direction from the inner diameter end section of the inclined section 14 and an inner peripheral skirt section 16 extending in the axial direction toward the multiple disc clutch 4 from the inner diameter end section of the radial section 15.

Then, the outer peripheral skirt section 13 is comprised of a first outer peripheral skirt section 13a extending toward the multiple disc clutch 4 side in the axial direction from an outer diameter end section of the end wall 12, a second outer peripheral skirt section 13b extending outwardly in the radial direction from the multiple disc clutch 4 side of the first outer peripheral skirt section 13a, and a third outer peripheral skirt section 13c extending toward the multiple disc clutch 4 side in the axial direction from the outer diameter end section of the second outer peripheral skirt section 13b. Here, the outer peripheral skirt section 13, particularly, the first outer peripheral skirt section 13a constitutes the axial section of the present invention and the end wall 12 and the inclined section 14 and radial section 15 constitute the radial section of the present invention. The piston member 11 is formed by molding (for example, press molding).

An O-ring 6 is accommodated in an annular groove 21 provided in the outer peripheral face of the shaft 2 and on the inner diameter side of the inner peripheral skirt section 16, the O-ring making hermetic contact with the inner peripheral face of the inner peripheral skirt section 16 freely slidably.

A sealing member 7 having a seal lip 71 which makes hermetic contact with the inner peripheral face of the first circular section 32 is fitted to the outer diameter side of the first outer peripheral skirt section 13a.

A pressure chamber X (line hydraulic pressure chamber) is formed between the piston member 11 and the housing 3 via the seal lip 71 and the O-ring 6.

A cancel plate 8 as an annular restricting member which restricts a motion in the axial direction is provided on the outer periphery side of the shaft 2 opposing the piston member 11. This cancel plate 8 is a metal ring composed of thin steel sheet (for example, SPCC), which is set to an inside diameter allowing itself to be attached to or detached from the shaft 2 freely and restricted by a stopper 9 from moving in the axial direction, more specifically in a direction of leaving from the piston member 11.

The outside diameter of the cancel plate 8 is smaller than the inside diameter of the outer peripheral skirt section 13 of the piston member 11.

That is, this cancel plate 8 is a metal ring extending from the shaft 2 to the outer peripheral skirt section 13 of the piston member 11 in the radial direction and has a seal lip 81 which makes hermetic contact with the inner peripheral face of the third outer peripheral skirt section 13c of the piston member 11 freely slidably at an outer diameter end thereof.

An oil chamber Y (cancel hydraulic chamber) is formed between the cancel plate 8 and the piston member 11, separately from an oil chamber Z on the side of the multiple disc clutch 4 side.

A pas sage 22 communicating with the pressure chamber X and a passage 23 communicating with the oil chamber Y are provided in the shaft 2.

A plurality of springs 10 are provided in circumferential direction as a biasing means for biasing the piston member 11 in a direction of leaving the cancel plate 8 between the cancel plate 8 and the piston member 11.

When the pressure chamber X is in a lower pressure because oil is supplied to the oil chamber Y via the passage 23 in the shaft 2 in the above-described structure, the biasing force of the spring 10 is applied to the piston member 11 and the end wall 12 of the piston member 11 makes contact with a positioning protrusion 35 so that the piston member 11 turns into stationary condition.

If hydraulic pressure P is applied to the pressure chamber X via the passage 22 in the shaft 2 so that pressure rises, the piston member 11 moves to the multiple disc clutch 4 side in the axial direction against the biasing force of the spring 10 and the multiple disc clutch 4 is pressed by the end section of the outer peripheral skirt section 13 of the piston member 11 so as to transmit a drive force.

To release the transmission of drive force, oil is supplied to the oil chamber Y to reduce the pressure of the pressure chamber X. Consequently, the piston member 11 is moved to the radial section 31 side of the housing 3 in the axial direction by the biasing force of the spring 10 and then, the piston member 11 is returned to its original position.

Next, the characteristic structure of this embodiment will be described.

According to this embodiment, the sealing member 7 having the seal lip 71 which makes hermetic contact with the inner peripheral face of the first circular section 32 is formed separately from the piston member 11 and fitted to the outer diameter side of the first outer peripheral skirt section 13a of the piston member 11. The sealing member 7 makes contact with the outer diameter side of the first outer peripheral skirt section 13a only through a contact section 72 formed of rubber elastic body. Hereinafter, the structure of the sealing member 7 will be described in detail.

The sealing member 7 includes seal main body 7a composed of rubber elastic body and a reinforcement ring 7b for reinforcing the seal main body 7a.

The seal main body 7a is formed integrally on the reinforcement ring 7b substantially throughout an entire periphery of the reinforcement ring 7b, and comprised of seal lips 71, 74 and a contact section 72.

The seal lip 71 is provided to extend from the end wall 12 side of the reinforcement ring 7b in an outward direction and toward the end wall 12 side and its lip tip end makes hermetic contact with the inner peripheral face of the first circular section 32 of the housing 3 freely slidably.

The contact section 72 is the section of the sealing member 7 which makes contact with the outer diameter side of the first outer peripheral skirt section 13a of the piston member 11 when the sealing member 7 is fitted to the piston member 11. That is, only the contact section 72 of the sealing member 7 makes contact with the piston member 11 when it is fitted to the piston member 11.

By forming the section which makes contact with the piston member 11 of the sealing member 7 when it is fitted to the piston member from rubber elastic body, the fitting force between the sealing member 7 and the piston member 11 can be reduced as compared with a case where it is fitted with the reinforcement ring 7b in a direct contact with the piston member 11.

The thickness of the piston member 11 and the reinforcement ring 7b may disperse because of their formation by molding (for example, pressing). Although there is a fear that the fitting force may disperse largely if the sealing member is fitted with the reinforcement ring 7b in contact with the piston member 11, the above-described structure can suppress the dispersion of the fitting force. As a consequence, the sealing member 7 is never deformed when the sealing member 7 is fitted to the piston member 11. Further, an allowance of the diameter of the reinforcement ring 7b does not need to be restricted strictly.

According to this embodiment, a longitudinal groove 73 is provided in the axial direction in the inner periphery of the contact section 72.

When the sealing member 7 is fitted to the piston member 11, provision of the longitudinal groove 73 allows the rubber elastic body constituting the contact section 72 to be deformed by compression and escape (be absorbed) into the longitudinal groove 73, thereby suppressing "peeling" of the rubber elastic body. As a consequence, generation of contaminant which is a problem within the automatic transmission can be suppressed. Thus, the bonded piston seal 1 of this embodiment can be applied even if there is any restriction of space in the axial direction, the degree of freedom of design can be raised. The size and quantity of the longitudinal grooves 73 are not restricted but may be set appropriately depending on the specification of the bonded piston seal 1 and it is preferable to arrange them equally (at an equal interval) in the circumferential direction.

According to this embodiment, a seal lip 74 which makes hermetic contact with the piston member 11 is provided.

The seal lip 74 extends to the inward direction from the end wall 12 side of the reinforcement ring 7b, making hermetic contact with an angle section 17 constituting an section between the first outer peripheral skirt section 13a and the end wall 12. Although the seal lip 74 makes hermetic contact with the angle section 17 in FIG. 2, any configuration may be adopted as long as it makes hermetic contact with the piston member 11 and it may make hermetic contact with the first outer peripheral skirt section 13a or the end wall 12. That is, it may be set appropriately corresponding to space in the axial direction.

Consequently, sealing performance between the sealing member 7 and the piston member 11 can be raised when hydraulic pressure is applied. Even if no longitudinal groove 73 is provided in the contact section 72, the sealing performance between the sealing member 7 and the piston member 11 can be improved by providing the seal lip 74, thereby improving reliability.

According to this embodiment, a groove (circumferential groove) 13d formed in the circumferential direction is provided at a position where the contact section 72 is fitted and makes contact with in the first outer peripheral skirt section 13a.

As a consequence, part of the rubber elastic body constituting the contact section 72 bites into the circumferential groove 13d to prevent the sealing member 7 from loosing out of the piston member 11.

Here, the circumferential groove 13d has a function of preventing the sealing member 7 from loosing out. Thus, although the shape of the circumferential groove 13d or the depth of the circumferential groove 13d is not restricted to any particular one as long as it functions to prevent the sealing member 7 from loosing out, the depth of the circumferential groove 13d is preferred to be about 0.5 mm and it is preferable that the circumferential groove 13d is provided on the entire circumference of the first outer peripheral skirt section 13a. Further, although as the shape of the circumferential groove 13d, FIG. 3 indicates the section as a substantially triangular (a substantially right triangular shape in which a loose side (upper side in the Figure) is substantially at right angle to the cylindrical face of the first outer peripheral skirt section 13a), the present invention is not restricted to this example, but a groove whose section is substantially trapezoidal (step-like), for example, as shown in FIG.4, may be adopted as long as it can serve as a space (groove, recession) into which part of the rubber elastic body constituting the contact section 72 bites with respect to the end face of the first outer peripheral skirt section 13a. Further, the quantity of the grooves may be set appropriately corresponding to the specification of the bonded piston seal 1.

In the meantime, although this embodiment has been described about a case where the sealingmember 7 is fitted to the outer diameter side of the bonded piston seal 1, that is, on the outer peripheral skirt section 13, the present invention can be applied to a case where the sealing member is provided on the inner diameter side (for example, inner peripheral skirt section 16).

### (Second embodiment)

Hereinafter, the hermetic sealing device according to the second embodiment of the present invention will be described.

In the first embodiment described above, the sealing performance between the sealing member 7 and the piston member 11 is improved by providing the seal lip 74 so as to suppress leakage of sealing object fluid even if the longitudinal groove 73 is provided.

In such a case, if the seal lip 74 is provided so as to make contact with the angle section 17 of the piston member 11, the angle section 17 (shape and roundness of a section (outer peripheral section) with which the seal lip 74 makes contact) needs to be controlled strictly in manufacturing process of the piston member 11.

The sealing member 70 of this embodiment eliminates the necessity of controlling the angle section 17 in manufacturing process of the piston member 11 which is required in the sealing member 7 described in the first embodiment.

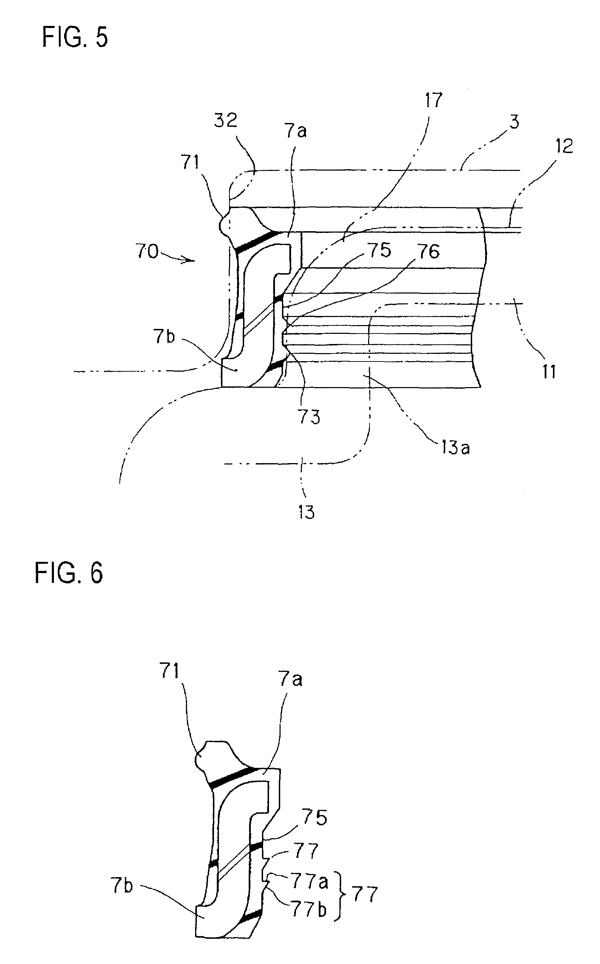

FIG. 5 is a schematic half sectional view showing the sealing member 70 constituting the bonded piston seal 1 as a hermetically sealing device of this embodiment. The sealing member 70 of this embodiment constitutes the bonded piston seal 1 like the seal member 7 of the first embodiment and like reference numerals are attached to the same components as the first embodiment and description thereof is not repeated here.

According to this embodiment, the sealing member 70 having the seal lip 71 which makes hermetic contact with the inner peripheral face of the first circular section 32 is formed separately from the piston member 11 and fitted to the outer diameter side of the first outer peripheral skirt section 13a of the piston member 11. Then, the section which makes contact with the outer diameter side of the first outer peripheral skirt section 13a in the sealing member 70 is only the seal main body 7a composed of rubber elastic material. Hereinafter, the structure of the sealing member 70 will be described in detail.

The sealing member 70 is comprised of the seal main body 7a composed of rubber elastic body and the reinforcement ring 7b for reinforcing the seal main body 7a.

The seal main body 7a is formed integrally with the reinforcement ring 7b substantially throughout the circumference of the reinforcement ring 7b and comprised of the seal lip 71 and a projecting (protrusion) section 76 which is projected in the inward direction (toward the inner periphery side) from the inner peripheral face (inner peripheral end section) 75 of the seal main body 7a.

When the sealing member 70 is fitted to the piston member 11, the projecting section 76 projecting from the inner peripheral face 75 of the seal main body 7a makes hermetic contact with the outer diameter side of the first outer peripheral skirt section 13a of the piston member 11. The section which makes contact with the piston member 11 in the sealing member 70 when the sealing member 70 is fitted to the piston member 11 is only the seal main body 7a.

Although preferably, the projecting section 76 is provided on the entire circumference of the inner peripheral face 75 of the seal main body 7a, the projecting section 76 is not restricted to this example, but may be of any structure if it hermetically seals an annular gap between the sealing member 70 and the piston member 11 when the sealing member 70 is fitted to the piston member 11. Although the projecting section 76 shown in FIG. 5 is constituted of two protrusions extending in the circumferential direction, the quantity of the protrusions is not restricted to this example, but it may be determined appropriately depending on the specification of the bonded piston seal 1.

By forming the section which makes contact with the piston member 11 of the sealing member 70 when it is fitted to the piston member from rubber elastic body, the fitting force between the sealing member 70 and the piston member 11 can be reduced as compared with a case where it is fitted with the reinforcement ring 7b in direct contact with the piston member 11.

The thickness of the piston member 11 and the reinforcement ring 7b may disperse because of their formations by molding (for example, pressing). Although there is a fear that the fitting force may disperse largely if the sealing member is fitted with the reinforcement ring 7b in contact with the piston member 11, the above-described structure can suppress the dispersion of the fitting force. As a consequence, the sealing member 70 is never deformed when the sealing member 70 is fitted to the piston member 11. Further, an allowance of the diameter of the reinforcement ring 7b does not need to be restricted strictly.

Because according to this embodiment, the projecting section 76 projecting from the inner peripheral face 75 of the sealing member 70 is fitted to the piston member 11, it comes that there exists a space in which the rubber elastic body constituting the projecting section 76 is deformed by compression and escapes into when the sealing member 70 is fitted to the piston member 11 (the compressed projecting section 76 is deformed when it escapes to the inner peripheral face 75 side), thereby preventing occurrence of "peeling" of the rubber elastic body. Consequently, generation of contaminant which is a problem within the automatic transmission can be suppressed. Therefore, the bonded piston seal 1 of the present invention can be applied preferably even if there is a restriction of space in the axial direction, whereby the freedom of design being raised.

Further, this embodiment enables the sealing performance between the sealing member 70 and the piston member 11 to be exerted by a simple configuration of providing the sealing member 70 with the projecting section 76. As a consequence, the necessity of controlling the angle section 17 inmanufacturingprocess of the piston member 11 can be eliminated.

Although in the first embodiment, the circumferential groove 13d in the first outer peripheral skirt section 13a shown in FIG. 3 does not need to be provided in the piston member 11 of this embodiment, the circumferential groove 13d may be provided to prevent the sealing member 70 from loosing out or position the sealing member 70. If the circumferential groove 13d is provided, the sealing performance between the sealing member 70 and the piston member 11 is protected from being lost by, for example, making the size of the cross section of the groove smaller than the size of the cross section of the projecting section 76 or increasing the quantity of the projecting sections 76.

Although the sectional shape of the section projecting from the inner peripheral face 75 of the projecting section 76 shown in FIG. 5 is of substantially isosceles triangle, it is not restricted to this example. FIG. 6 shows a schematic sectional view showing a modification of the projecting section 76.

As shown in FIG. 6, the projecting section 77 is comprised of a radial end face 77a extending in an inward direction from the inner peripheral face 75 and an inclined end face 77b, which extends in the outward direction from an inner diameter end section of the radial end face 77a such that it is inclined toward the multiple disc clutch 4, up to the inner peripheral face 75, the projecting section having a substantially saw-like cross section.

Assembly efficiency upon fitting the sealing member 70 to the piston member 11 can be improved by forming the projecting section with the inclined end face 77b located in the downstream in the installation direction when fitting the sealing member 70 to the piston member 11, inclined with respect to the radial end face 77a located in the upstream of the installation direction. Further, the sealing member 70 can be prevented from loosing out of the piston member 11 after the sealing member is fitted (the sealing member 70 becomes hard to loose out of the piston member 11).

## Claims

1. A hermetically sealing device comprising:
an annular member which is provided in an annular hole movably in the axial direction and includes a radial section and an axial section extending in the axial direction from at least one of an inner diameter end section and an outer diameter end section of the radial section, and
a sealing member which is provided so as to be fitted to the axial section of the annular member for hermetically sealing an annular gap between the annular member and the peripheral face of the annular hole,
the hermetically sealing device sealing one side and the other side in the axial direction of the annular member, wherein
the sealing member includes
a reinforcement ring, and
a seal main body which is provided integrally in the reinforcement ring and has a contact section making contact with the axial section and a seal lip making hermetic contact with the peripheral face of the annular hole when the sealing member is fitted to the axial section of the annular member.

2. The hermetically sealing device according to claim 1, wherein the contact section further comprises a groove extending in the axial direction in a section making contact with the axial section.

3. The hermetically sealing device according to claim 1 or 2, wherein the axial section further comprises a groove extending in the circumferential direction in a section making contact with the contact section.

4. The hermetically sealing device according to any one of claims 1 to 3, wherein the seal main body further comprises an angle section located between the axial section and the radial section and a seal lip making hermetic contact with the axial section or the radial section.
